# EUROPÄISCHE PATENTSCHRIFT

(11) **EP 3 553 590 B1**
(45) Veröffentlichungstag und Bekanntmachung des Hinweises auf die Patenterteilung: **28.05.2025**
(21) Anmeldenummer: 18167203.1
(22) Anmeldetag: 13.04.2018
(51) Int. Cl.: G02B 30/56, G03B 19/16, G02B 6/06, G03B 35/08, H04B 10/25, H04N 13/236, H04N 13/32

(54) **VORRICHTUNG UND VERFAHREN ZUR AUFZEICHNUNG, ÜBERTRAGUNG UND RÄUMLICHEN REKONSTRUKTION VON BILDERN DREIDIMENSIONALER OBJEKTE**
DEVICE AND METHOD FOR RECORDING, TRANSMITTING AND SPATIAL RECONSTRUCTION OF IMAGES OF THREE-DIMENSIONAL OBJECTS
DISPOSITIF ET PROCÉDÉ D'ENREGISTREMENT, DE TRANSMISSION ET DE RECONSTRUCTION SPATIALE D'IMAGES D'OBJETS TRIDIMENSIONNELS

(43) Veröffentlichungstag der Anmeldung: 16.10.2019
(73) Patentinhaber: Deutsche Telekom AG, 53113 Bonn (DE)
(72) Erfinder: BUNGE, Christian-Alexander, 14532 Kleinmachnow (DE)
(74) Vertreter: Vossius & Partner Patentanwälte Rechtsanwälte mbB

(56) Entgegenhaltungen:
- CN-A- 103 592 811
- DE-A1- 10 162 846
- US-A- 4 650 279
- US-A1- 2015 370 011
- US-A1- 2017 243 373
- KEITH GIBBS: "The pinhole camera", 1 January 2012 (2012-01-01), XP055543509, Retrieved from the Internet <URL:http://www.schoolphysics.co.uk/age11-14/Light/text/Pinhole_camera/index.html> [retrieved on 20190117]
- MICHAEL ZHANG: "Build a Cheapo Photo Projector Using a Phone, Shoebox, and Magnifying Glass", 2 February 2012 (2012-02-02), XP055543503, Retrieved from the Internet <URL:https://petapixel.com/2013/02/02/build-a-cheapo-photo-projector-using-a-phone-shoebox-and-magnifying-glass/> [retrieved on 20190117]

## Beschreibung

### Gebiet der Erfindung

Die vorliegende Erfindung liegt auf dem Gebiet der technischen Optik und betrifft eine Vorrichtung zur Aufzeichnung und eine Vorrichtung zur Wiedergabe von mindestens einem Bild eines dreidimensionalen Objekts, ein Aufzeichnungs- und Wiedergabesystem, ein Endgerät für Telekommunikation, sowie ein Verfahren zur Aufzeichnung, Übertragung und räumlichen Rekonstruktion von Bildern dreidimensionaler Objekte.

### Stand der Technik

Bei der digitalen Übertragung von Bildern und Filmen wird meist eine zweidimensionale Projektion auf einem Detektor abgetastet und diese zweidimensionalen Daten, gegebenenfalls nachdem sie mittels geeigneter Algorithmen komprimiert wurden, an eine entfernte Stelle übertragen, wo sie wieder örtlich zweidimensional zusammengesetzt werden, damit dort ein identisches Abbild des Ursprungsbildes entsteht.

Der Trend, zum Beispiel in der Medientechnik oder in der Telekommunikation, ist derzeit die realistische Reproduktion von dreidimensionalen Bildern. Dreidimensionale Bilder und Filme werden aufgezeichnet, indem zwei Bilder des Objekts aus leicht unterschiedlichen Blickwinkeln aufgenommen werden, die dem Abstand der Augen entsprechen. Diese zwei Bilder werden übertragen und anschließend mit Hilfe eines Emitters an einer anderen Stelle wieder rekonstruiert. Für diese Art der Übertragung existieren diverse Methoden und Formate die in US 3 912 856 A, US 2011/0141236 A1 und US 2011/0149024 A1 ausführlich erläutert sind. Eine wirkliche dreidimensionale Abbildung eines räumlichen Objekts ist damit nicht möglich. Das Bild, das beide Augen beim entfernten Betrachter sehen, ist allerdings so, als ob ein dreidimensionales Objekt sich vor dem Betrachter befände. So entsteht der Eindruck einer dreidimensionalen Abbildung.

Eine wirkliche Rekonstruktion eines dreidimensionalen Objekts ist mit sogenannten plenoptische Kameras oder Lichtfeldkameras möglich, wie sie in der EP 3 057 317 A1 offenbart sind.

Die DE 10 2005 013558 A1 beschreibt eine Vorrichtung, die neben der örtlichen Lichtverteilung auch die jeweilige Winkelverteilung aufnimmt, sodass beispielsweise eine Neuberechnung der Tiefenschärfe möglich wird. Durch die zusätzliche Aufnahme mehrerer Bilder unter verschiedenen Winkeln erhöht sich die Anzahl der aufzunehmenden bzw. zu verarbeitenden Bildelemente um die Zahl der aufzunehmenden Winkel. Der Aufwand steigt damit relativ stark an, da er direkt proportional zum Produkt aus der Anzahl der Bildpunkte und der Zahl der aufzunehmenden Winkel ist.

Eine direktere und einfachere Methode zur dreidimensionalen Reproduktion eines Objekts ist in der US 3 647 284 A beschrieben. Hier werden zwei konkave Spiegel so angeordnet, dass diese sich gegenüberstehen und deren Fokalpunkte auf den Scheitelpunkten der jeweils gegenüberliegenden Konvexspiegel liegen. Der Nachteil dieser Anordnung ist die Notwendigkeit zweier Konvexspiegel, die einen gewissen Platzbedarf aufweisen und als zusätzliche Bauteile Kosten verursachen.

Daher ist in der WO 2010/102838 A1 eine Anordnung vorgeschlagen worden, bei der auf einen der beiden Konvexspiegel verzichtet werden kann. Die Anordnung nutzt dabei die Tatsache, dass bei der US 3 647 284 A der Strahlengang auf der Symmetrieachse zwischen beiden Spiegeln direkt rechtwinklig zu eben dieser verläuft und sich daher die Lichtverteilung auf dieser Ebene mittels eines flächigen Detektors aufnehmen lässt. Das aufgenommene Bild wird zur Reproduktion des Bildes an entfernter Stelle in einer ähnlichen Anordnung mittels eines Bildschirms, der auf der Symmetrieebene liegt und das Licht rechtwinklig zur Oberfläche abgibt, genutzt. Die in der WO 2010/102838 A1 beschriebene Anordnung benötigt zur Aufzeichnung des Bildes mindestens einen konvexen Spiegel.

US 2017/243373 A1 bezieht sich auf ein Bilderfassungssystem, das mehrere Bildsensoren umfasst, die in einem Muster derart angeordnet sind, dass zwischen benachbarten Bildsensoren Lücken vorhanden sind. Das Bilderfassungssystem weist außerdem eine Hauptlinse auf, die konfiguriert ist, um einfallendes Licht entlang eines optischen Pfads zu lenken, sowie ein innerhalb des optischen Pfads angeordnetes Mikrolinsenarray und mehrere sich verjüngende Faseroptikbündel. Jedes sich verjüngende Faseroptikbündel hat ein vorderes Ende, das innerhalb des optischen Pfades positioniert ist, und ein hinteres Ende, das nahe einem der Bildsensoren angeordnet ist.

CN 103 592 881 A bezieht sich auf einen gekrümmten Reflektor der durch eine Apertur einfallendes Licht eines Objekts auf einen Bildsensor lenkt, wodurch sich ein digitales Lochkamera-Bild erfassen lässt.

DE 101 62 846 A1 bezieht sich auf eine Lochkamera mit einer, im Wesentlichen flachen, vorderen Oberfläche und einer gekrümmten Negativanlagefläche im Inneren ihres Gehäuses, woran sich ein Negativ befestigen lässt .

Online finden sich außerd allgmeine Beschreibungen zum Funktionsprinzip von Lochkameras und Fotoprojektoren (siehe beispielsweise Keith Gibbs: "The pinhole camera", 2012, (URL: http://www.schoolphysics.co.uk/age11-14/Light/text/Pinhole_camera/index.html, abgerufen am 25.04.2019) oder Michael Zang: "Build a Cheapo Photo Projector Using a Phone, Shoebox, and Magnifying Glass", 2012, (URL: https://petapixel.com/2013/02/02/build-a-cheapo-photoprojector-using-a-phone-shoebox-and-magnifying-glass/, abgerufen am 25.04.2019).

US 4 650 279 A bezieht sich auf eine Faseroptiklinse mit einer Eingangsapertur, einer Ausgangsapertur und einer Anordnung von optischen Fasern, die die Eingangs- und Ausgangsaperturen miteinander verbindet. Die optischen Fasern sind Einmoden-Elemente mit gleicher optischer Weglänge, zum phasenweisen Übertragen von Lichtstrahlen von der Eingangsapertur zur Ausgangsapertur. Die faseroptischen Elemente sind an den gleichen relativen Positionen jeder Apertur miteinander verbunden, um die Wellenfront an der Eingangsapertur zu empfangen und ein Bild im Brennpunkt der Ausgangsapertur zu erzeugen.

US 2015/370011A1 bezieht sich auf eine Bildaufnahmevorrichtung, die ein optisches Abbildungssystem, eine Bildaufnahmevorrichtung und ein optisches Faserbündel umfasst, das aus mehreren optischen Fasern besteht, die konfiguriert sind, um Licht von dem optischen Abbildungssystem zu der Bildaufnahmevorrichtung zu leiten.

Die vorliegende Erfindung hat die Aufgabe, den komplizierten Strahlengang von klassischen Spiegel- und Linsensystemen zur Aufnahme, Übertragung und Rekonstruktion von Bildern dreidimensionaler Objekte zu vereinfachen und dadurch den Raumbedarf bisheriger Systeme zu verringern. Weiterhin soll die vorliegende Erfindung es ermöglichen, realistischere Bilder und Filme zu erzeugen und zu übertragen.

### Kurzbeschreibung der Erfindung

Die genannte Aufgabe wird durch die Merkmale des Anspruchs 1 bzw durch ein Verfahren gemäss Anspruch 9 gelöst.

Bevorzugte Weiterbildungen sind in den abhängigen Ansprüchen angegeben.

Gemäß einem ersten Aspekt weist eine Vorrichtung zur Aufzeichnung von mindestens einem Bild eines dreidimensionalen Objekts eine optische Achse, eine Apertur und einen Detektor auf, wobei das dreidimensionale Objekt vor der Apertur und der Detektor hinter der Apertur angeordnet sind. Die Öffnung der Apertur ist derart ausgebildet ist, dass sich die Ortsverteilung des durchtretenden Lichtes im Bereich der Apertur durch den Ausbreitungswinkel unterscheidet und dass der Detektor ein winkelauflösender Detektor ist, der konfiguriert ist, um die Intensität des von dem dreidimensionalen Objekt ausgesandten Lichtes über den Winkel um die Apertur zu erfassen.

Die Aufzeichnungsvorrichtung ist ferner mit einer optischen Einrichtung ausgestattet, die konfiguriert ist, um ausschließlich vom Objekt ausgesandtes, senkrecht auf den Detektor einfallendes Licht passieren zu lassen. Die optische Einrichtung kann beispielsweise durch rohrförmige Blenden oder Blickschutzfilter gebildet werden. Die Aufzeichnungsvorrichtung kann außerdem Mittel aufweisen, mit denen die vom Detektor erfasste Winkelverteilung in eine elektronische Datei codiert werden kann.

Der Detektor der Aufzeichnungsvorrichtung ist aus mehreren flächig konzentrisch um die Apertur angeordneten Empfangseinrichtungen gebildet. Alternativ kann der Detektor aus optischen Fasern und mindestens einer Empfangseinrichtung bestehen, wobei die optischen Fasern konfiguriert sind, um mit ihren ersten Enden Bildinformationen aufzunehmen und die Bildinformationen an die mindestens eine Empfangseinrichtung zu leiten, die sich nicht im Strahlengang der Anordnung befindet. Darüber hinaus kann der Detektor konfiguriert sein, um zusätzlich Farbinformationen zu erfassen. Dies kann beispielsweise durch Filtern der Farbelemente und anschließendes Erfassen ihrer Helligkeit erfolgen.

Sowohl durch das zusätzliche Erfassen der Farbinformation als auch durch die Verwendung einer optischen Einrichtung, die nur senkrechten Lichteinfall auf den Detektor erlaubt bzw. den Detektor nur für Licht unter solchen Einfallswinkel empfindlich macht, lässt sich die Aufzeichnungsqualität der Vorrichtung erhöhen.

Die Vorrichtung zur Aufzeichnung von mindestens einem Bild eines dreidimensionalen Objekts kann auf Abbildungsoptiken, wie beispielsweise Spiegel, verzichten. Dadurch werden Aufwand und Komplexität der Vorrichtung, verglichen mit bisherigen Vorrichtungen, deutlich verringert. Der vollständige Verzicht auf spiegelnde Elemente erlaubt außerdem Flexibilität bei der Anordnung der Komponenten, indem sich beispielsweise die Empfangseinrichtungen des Detektors nicht im Strahlengang befinden müssen und keine flächige Anordnung der Empfangseinrichtungen notwendig ist.

Die Aufzeichnungsvorrichtung kann jedoch auch eine Abbildungsoptik aufweisen, die konfiguriert ist, um den Abstrahlwinkel an der Apertur eindeutig einem Ort in der Abbildungsebene zuzuordnen. In diesem Fall weist der Detektor mindestens eine flächig angeordnete Empfangseinrichtung auf. Als Abbildungsoptik kann beispielsweise mindestens ein planarer Spiegel verwendet werden, der konfiguriert ist, um die Winkelverteilung linear auf mindestens eine Empfangseinrichtung abzubilden. Dieser planare Spiegel kann gegenüber der Empfangseinrichtung winklig angeordnet sein, sodass der Einfallswinkel der Lichtstrahlen, die auf den planaren Spiegel treffen, kompensiert wird. Alternativ kann die Aufzeichnungsvorrichtung auch eine digitale Signalverarbeitung aufweisen, die konfiguriert ist, um diesen Einfallswinkel zu kompensieren. Die Abbildungsoptik kann alternativ auch durch mindestens einen gleichförmig abbildenden Spiegel gebildet werden. Durch die Verwendung einer Abbildungsoptik lassen sich kompaktere Anordnungen der Komponenten der Aufzeichnungsvorrichtung realisieren. Weiterhin können flächige Detektoren verwendet werden, deren Auflösung über die gesamte Detektorfläche gleich ist.

Gemäß einem weiteren Aspekt weist eine Vorrichtung zur Wiedergabe von mindestens einem Bild eines dreidimensionalen Objekts eine optische Achse, eine Projektionsfläche, eine Apertur und einen Emitter auf, wobei die Projektionsfläche hinter der Apertur und der Emitter vor der Apertur angeordnet sind. Der Emitter ist ein winkelauflösender Emitter, der konfiguriert ist,
um Licht, entsprechend einer bekannten Intensitätsverteilung des von einem dreidimensionalen Objekt ausgesandten Lichtes, über einen Winkel zur Apertur zu emittieren, wodurch auf der Projektionsfläche ein virtuelles Objekt entsteht. Der Emitter besteht aus mehreren optischen Emittereinrichtungen, die flächig konzentrisch um die Apertur angeordnet sind und konfiguriert sein können, um Licht senkrecht auf eine Apertur einzustrahlen.

Erfindungsgemäss wird ein Aufzeichnungs- und Wiedergabesystem zum Aufzeichnen und Wiedergeben eines Bildes eines dreidimensionalen Objekts bereitgestellt. Das Aufzeichnungs- und Wiedergabesystem zum Aufzeichnen und Wiedergeben eines Bildes eines dreidimensionalen Objekts weist eine erfindungsgemäße Aufzeichnungsvorrichtung und eine erfindungsgemäße Wiedergabevorrichtung auf. Des Weiteren kann das Aufzeichnungs- und Wiedergabesystem ein Übertragungsmedium aufweisen, das konfiguriert ist, um Bildinformationen von dem Detektor der Aufzeichnungsvorrichtung zu einem Emitter der Wiedergabevorrichtung zu übertragen. Dabei ist der Emitter konfiguriert, um die durch das Übertragungsmedium an ihn übertragenen Bildinformationen entsprechend der erfassten Winkelverteilung räumlich zu rekonstruieren.

Weiterhin kann das Aufzeichnungs- und Wiedergabesystem optische Fasern enthalten, die konfiguriert sind, um den Detektor, das Übertragungsmedium und den Emitter zu bilden, indem sie mit ihrem ersten Ende die Bildsignale aufnehmen, diese Bildsignale an ihr zweites Ende übertragen und die Bildsignale an ihrem zweiten Ende emittieren. Die optischen Fasern können als geordnetes Faserbündel ausgebildet sein, bei denen die Faserenden auseinander geführt und flächig angeordnet sind. Die Anordnung der Faserenden kann beispielsweise konzentrisch um eine Apertur erfolgen. Ein wesentlicher Vorteil des beschriebenen Aufzeichnungs- und Wiedergabesystems ist, dass weder die Detektionsfläche noch die Projektionsfläche bei der Bildrekonstruktion in der Objektebene liegen müssen. Außerdem wird nicht zwangsläufig eine Aussparung für die Apertur benötigt. Durch die Verwendung von flächigen Detektoren, wie sie beispielsweise in CCD-Kameras üblich sind, können die Kosten der Aufzeichnungs- und Wiedergabevorrichtung reduziert werden.

Das Endgerät gemäß einem weiteren Aspekt der Erfindung, kann ein Endgerät für Telekommunikation sein, das dadurch gekennzeichnet ist, dass es eine Aufzeichnungsvorrichtung und/oder eine Wiedergabevorrichtung, wie zuvor beschrieben, enthält. Gemäß einem weiteren erfindungsgemäßen Aspekt wird ein Verfahren zur Aufzeichnung, Übertragung und Rekonstruktion von mindestens einem Bild eines dreidimensionalen Objekts bereitgestellt. Das Verfahren zur Aufzeichnung, Übertragung und Rekonstruktion von mindestens einem Bild eines dreidimensionalen Objekts weist einen Schritt zum Aufzeichnen von Bildinformationen, des von einem dreidimensionalen Objekt ausgesandten Lichtes, mit Hilfe des Detektors auf, wobei die Bildinformationen die Winkelverteilung des von dem Objekt ausgesandten Lichtes um die Apertur beinhalten. Weiterhin weist das Verfahren einen Schritt zur Übertragung der erfassten Bildinformationen an den Emitter auf, sowie einen Schritt zur Rekonstruktion des Bildes durch den Emitter, unter Einbezug der erfassten und übertragenen Winkelverteilung. Die Winkelverteilung kann im Zuge des Verfahrens in eine räumliche Verteilung in der Abbildungsebene transformiert werden. Außerdem können die erfassten Bildinformationen im Zuge des Verfahrens in eine elektronische Datei codiert werden.

Sowohl der Detektor zum Aufzeichnen der Bildinformationen als auch der Emitter zur Rekonstruktion des Bildes sind sind winkelauflösende Einrichtungen. Durch eine entsprechende Anordnung der Komponenten der Vorrichtungen unterscheidet sich das durch die Apertur tretende Licht vornehmlich durch seinen Ausbreitungswinkel, weswegen es erfindungsgemäß ausreichend ist, die Winkelverteilung aufzuzeichnen und an einen Emitter zu übertragen, der durch Lichtemission ein virtuelles dreidimensionales Objekt erzeugen kann.

Die Vorrichtungen zur Aufzeichnung und Wiedergabe von mindestens einem Bild eines dreidimensionalen Objekts, das Aufzeichnungs- und Wiedergabesystem, das Endgerät sowie das Verfahren zur Aufzeichnung, Übertragung und Rekonstruktion von mindestens einem Bild eines dreidimensionalen Objekts erlaubt es realistischere Bilder und Filme zu erzeugen und zu übertragen. Dies kann beispielsweise für die Unterhaltung, Fernwartung und Inspektion dreidimensionaler Objekte oder auch Steuerung von Roboterarmen etc. angewandt werden. Darüber hinaus lassen sich damit neuartige Formen der Datenkommunikation nutzen, bei der die Information über die räumliche Tiefe zur Codierung hinzugenommen werden kann, wodurch effizientere und robustere Übertragungsformate realisierbar sind.

### Kurzbeschreibung der Figuren

Die Erfindung wird anhand der beigefügten Figuren näher erläutert. Es zeigen:
- Fig. 1:: Eine schematische Schnittansicht der Vorrichtung zur Aufzeichnung von mindestens eines Bildes eines dreidimensionalen Objekts;
- Fig. 2:: Eine schematische Schnittansicht der optischen Einrichtung, beispielhaft als rohrförmige Blenden ausgebildet;
- Fig. 3:: Eine schematische Schnittansicht des winkelauflösenden Detektors mit Empfangseinrichtungen gemäß einer ersten Ausführungsform, die konzentrisch um die Apertur angeordnet sind;
- Fig. 4:: Eine schematische Schnittansicht des winkelauflösenden Detektors gemäß einer zweiten Ausführungsform mit mindestens einer Empfangseinrichtung und optischen Fasern;
- Figs. 5a und 5b:: Schematische Schnittansichten einer alternativen Ausführungsform der Vorrichtung zur Aufzeichnung von Bildern eines dreidimensionalen Objekts mit alternativen Abbildungsoptiken;
- Fig. 6:: Eine schematische Schnittansicht der Vorrichtung zur Wiedergabe von mindestens einem Bild eines dreidimensionalen Objekts;
- Fig. 7:: Eine schematische Schnittansicht des winkelauflösenden Emitters mit Emittereinrichtungen, die konzentrisch um die Apertur angeordnet sind;
- Fig. 8:: Ein System zur Aufzeichnung, Übertragung und Rekonstruktion von mindestens einem Bild eines dreidimensionalen Objekts mit kreisförmig angeordneten Faserenden eines Faserbündels; und
- Fig. 9:: Einen schematischen Ablauf des Verfahrens zur Aufzeichnung, Übertragung und Wiedergabe von mindestens einem Bild eines dreidimensionalen Objekts.

### Detaillierte Beschreibung der Erfindung

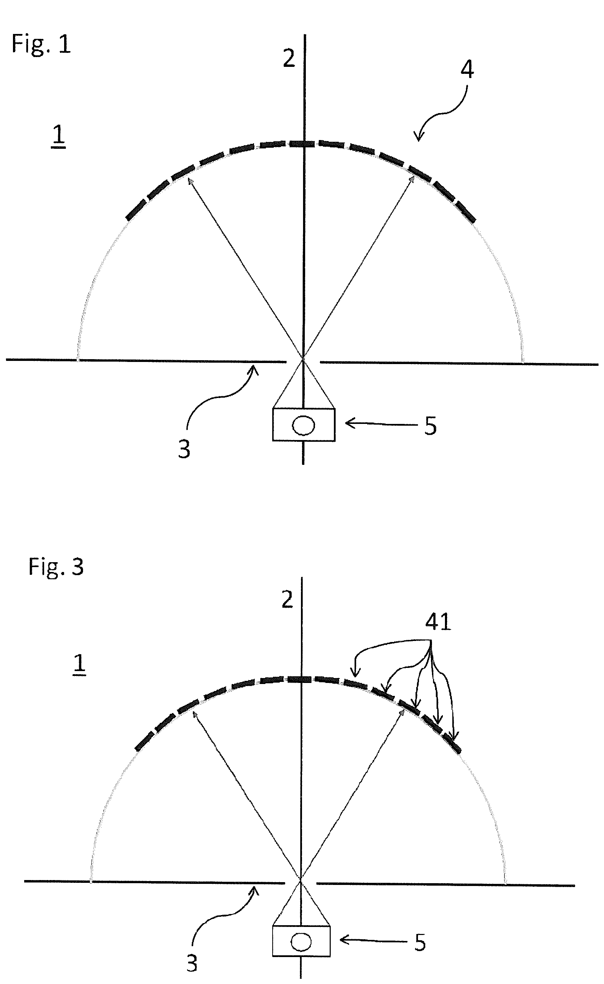

Fig. 1 zeigt eine Vorrichtung zur Aufzeichnung von mindestens einem Bild eines dreidimensionalen Objekts. Die Vorrichtung 1 weist eine optische Achse 2, eine Apertur 3 und einen Detektor 4 auf. Das dreidimensionale Objekt 5 ist vor der Apertur 3 und der Detektor 4 ist hinter der Apertur 3 angeordnet. Die Öffnung der Apertur 3 ist derart ausgebildet, dass sich die Ortsverteilung des durchtretenden Lichtes im Bereich der Apertur 3 durch den Ausbreitungswinkel unterscheidet. Der Detektor 4 ist ein winkelauflösender Detektor, der konfiguriert ist, um die Intensität des von dem dreidimensionalen Objekt 5 ausgesandten Lichtes über den Winkel um die Apertur 3 zu erfassen.

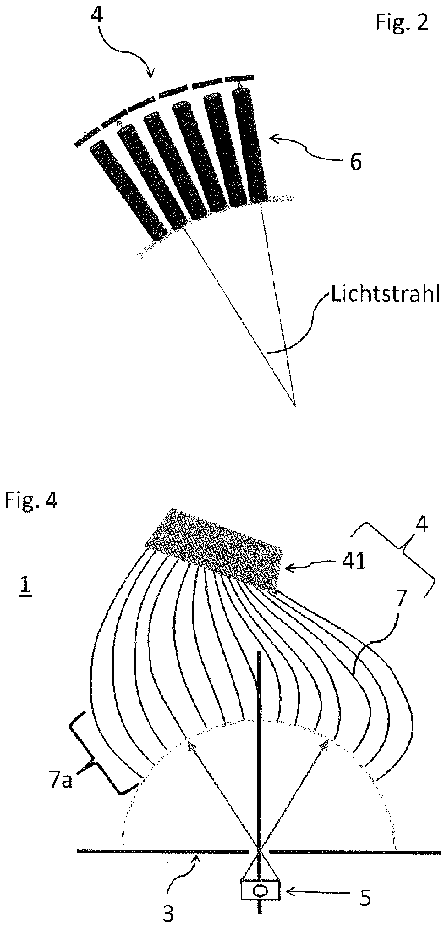

In Fig. 3 ist eine erste Ausführungsform der Vorrichtung 1 dargestellt, bei der der Detektor 4 aus mehreren flächig konzentrisch um die Apertur angeordneten Empfangseinrichtungen 41 gebildet ist. Um ausschließlich senkrecht auf den Detektor 4 bzw. die Empfangseinrichtungen 41 einfallendes Licht zu erfassen, kann ferner eine optische Einrichtung 6 (vgl. Fig. 2) verwendet werden, die im Strahlengang zwischen dem Objekt 5 und dem Detektor 4 angeordnet ist. Eine derartige optische Einrichtung 6 kann, wie in Fig. 2 dargestellt ist, aus mehreren nebeneinander angeordneten rohrförmigen Blenden bestehen, allerdings sind auch andere optische Elemente, die das Licht entsprechend absorbieren bzw. transmittieren, beispielsweise Blickschutzfilter oder ähnliches, möglich. Des Weiteren kann der Detektor 4 konfiguriert sein, um zusätzlich Farbinformationen zu erfassen. Hierzu kann die Helligkeit verschiedener Farben mittels vorgeschalteter Filter erfasst werden. Die erfassten Bildinformationen können in eine elektronische Datei codiert werden.

In einer zweiten Ausführungsform gemäß Fig. 4 kann der Detektor 4 der Vorrichtung 1 mindestens eine Empfangseinrichtung 41 sowie optische Fasern 7 enthalten, die konfiguriert sind, um Bildinformationen mit ihren ersten Enden 7a aufzunehmen und diese an die mindestens eine Empfangseinrichtung 41 zu leiten, die sich nicht im Strahlengang der Anordnung befindet. Insbesondere sind die optischen Fasern 7 derart angeordnet, dass sie die Information über die Winkelverteilung des auf sie auftreffenden Lichtes an die mindestens eine Empfangseinrichtung 41 weiterleiten. Durch Verwendung von optischen Fasern 7 mit einer kleinen numerischen Apertur kann sichergestellt werden, dass nur nahezu senkrecht einfallendes Licht erfasst und auf die mindestens eine Empfangseinrichtung 41 geleitet wird. Bei Verwendung von optischen Fasern 7 mit einer kleinen numerischen Apertur, kann die voranstehend beschrieben optische Einrichtung 6 entfallen.

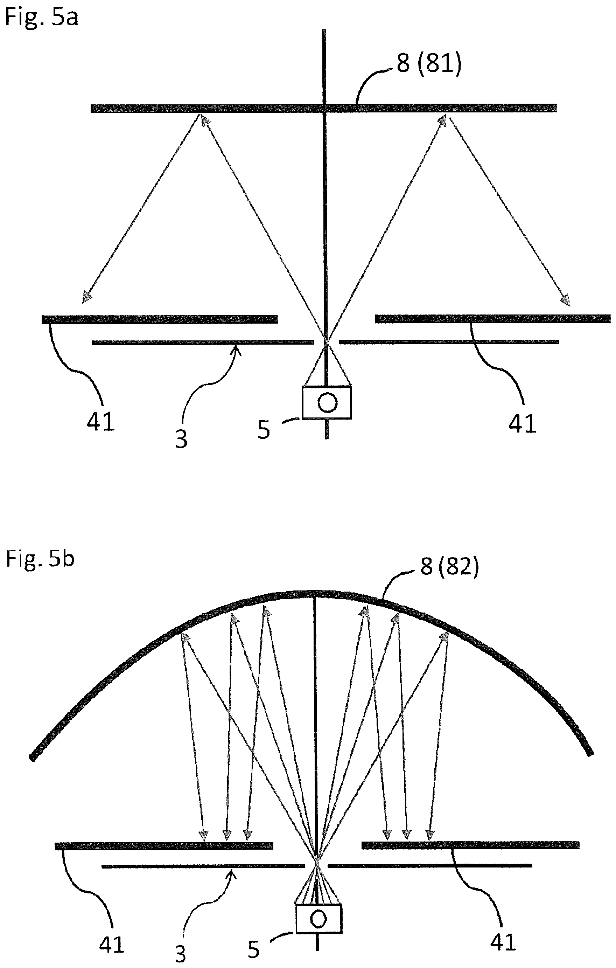

Gemäß einer weiteren Ausführungsform weist die Vorrichtung 1 eine Abbildungsoptik 8 auf, die konfiguriert ist, um den Abstrahlwinkel an der Apertur eindeutig einem Ort in der Abbildungsebene zuzuordnen, und einen Detektor 4 mit mindestens einer flächig angeordneten Empfangseinrichtung 41. Wie in Fig. 5 dargestellt ist, kann eine Abbildungsoptik 8 beispielsweise mindestens ein planarer Spiegel 81 oder ein gleichförmig abbildender Spiegel 82 sein, der konfiguriert ist, um die Winkelverteilung linear auf mindestens eine Empfangseinrichtung 41 abzubilden. Durch den Einsatz einer derartigen Abbildungsoptik 8 lassen sich kompaktere Ausführungen der Vorrichtung 1 realisieren. Zur Kompensation des Einfallswinkels der Lichtstrahlen auf den planaren Spiegel 81 kann die mindestens Empfangseinrichtung 41 gegenüber dem planaren Spiegel 81 winklig angeordnet sein. Alternativ kann zur Kompensation des Einfallswinkels der Lichtstrahlen eine digitale Signalverarbeitung eingesetzt werden.

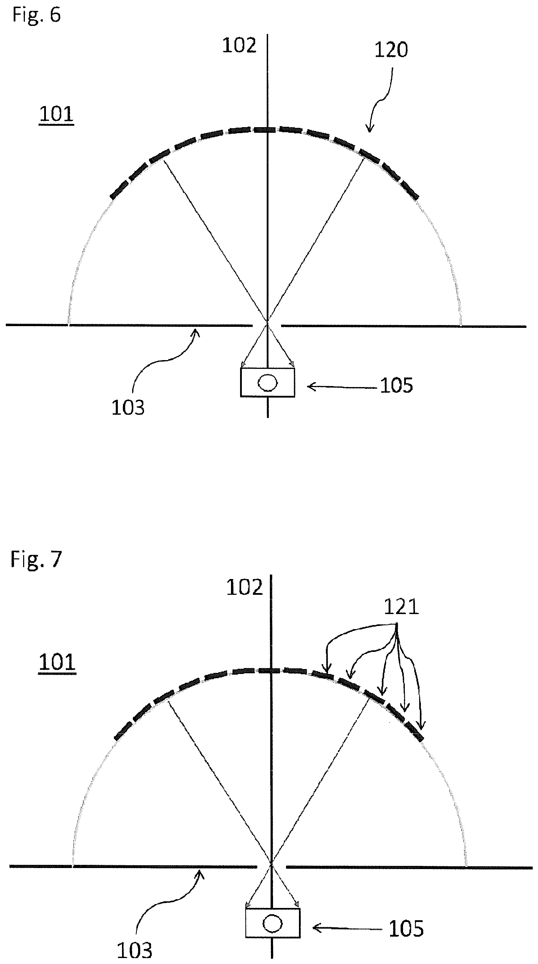

Fig. 6 zeigt eine Vorrichtung 101 zur Wiedergabe von mindestens einem Bild eines dreidimensionalen Objekts 105 (virtuelles Objekt), gemäß einem weiteren Aspekt der Erfindung. Die Vorrichtung 101 weist eine optische Achse 102, eine Apertur 103 und einen Emitter 120 auf. Der Emitter 120 ist ein winkelauflösender Emitter, der vor der Apertur 103 angeordnet ist und der konfiguriert ist, um Licht, entsprechend einer bekannten Intensitätsverteilung des von einem dreidimensionalen Objekt 5 ausgesandten Lichtes, über einen Winkel zur Apertur 103 zu emittieren, wodurch auf einer Projektionsfläche hinter der Apertur 103 ein virtuelles Objekt 105 entsteht. Fig. 7 zeigt eine Ausführungsform der Vorrichtung 101 bei der der Emitter 120 aus mehreren optischen Emittereinrichtungen 121 besteht, die flächig konzentrisch um eine Apertur 103 angeordnet sind und Licht senkrecht auf die Apertur 103 einstrahlen.

Erfindungsgemäss bilden die beschriebene Vorrichtung 1 zur Aufzeichnung von mindestens einem Bild eines dreidimensionalen Objekts sowie die Vorrichtung 101 zur Wiedergabe von mindestens einem Bild eines dreidimensionalen Objekts 105 (virtuelles Objekt), ein Aufzeichnungs- und Wiedergabesystem. Das Aufzeichnungs- und Wiedergabesystem kann ferner ein Übertragungsmedium 700 aufweisen, welches konfiguriert ist, um Bildinformationen von dem Detektor 4 der Aufzeichnungsvorrichtung 1 zu dem Emitter 120 der Wiedergabevorrichtung 101 zu übertragen, der die erfassten Bildinformationen des Detektors 4 räumlich rekonstruiert. Das Übertragungsmedium 700 kann beispielsweise aus optischen Fasern 7 bestehen.

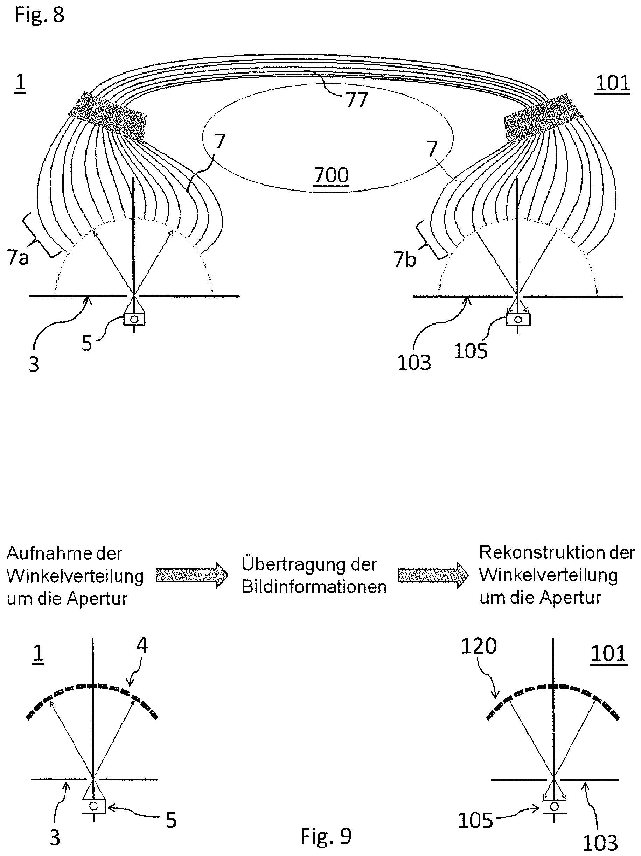

In einer Ausführungsform des Systems kann das Übertragungsmedium 700, welches beispielsweise aus optischen Fasern 7 (vgl. Fig. 8) besteht, die Bildinformationen mit seinem ersten Ende 7a aufnehmen und diese Bildinformationen an sein zweites Ende 7b übertragen, wo die Bildinformationen in Form von Licht emittiert werden. Die optischen Fasern 7 können dabei als geordnetes Faserbündel 77 ausgebildet sein, deren die Faserenden an der Detektorseite sowie an der Emitterseite auseinander geführt und flächig angeordnet sind, beispielsweise konzentrisch um eine Apertur. In Fig. 8 ist eine besonders vorteilhafte Ausführungsform dargestellt, bei der die Enden der optischen Fasern 7a und 7b sowohl an der Detektorseite als auch an der Emitterseite konzentrisch um eine Apertur angeordnet sind. In diesem Beispiel bilden die optischen Fasern 7 den Detektor 4, das Übertragungsmedium 700 und den Emitter 120, wodurch ein virtuelles Bild 105 eines dreidimensionalen Objekts 5 an einer entfernten Stelle (emitterseitig) rekonstruiert werden kann.

Die vorliegende Erfindung betrifft als weiteren Aspekt ein Verfahren zur Aufzeichnung, Übertragung und Rekonstruktion von mindestens einem Bild eines dreidimensionalen Objekts, unter Verwendung der beschriebenen Aufzeichnungs- und Wiedergabevorrichtung. Fig. 9 beschreibt schematisch das Verfahren. Zunächst wird das Objekt 5 vor einer schmalen Apertur 3 platziert, die eine so geringe Öffnung aufweist, dass man in erster Näherung davon ausgehen kann, dass sich die Ortsverteilung des durchtretenden Lichtes vornehmlich durch den Ausbreitungswinkel im Bereich der Apertur unterscheidet. Diese Winkelverteilung des von dem Objekt 5 ausgesandten Lichtes um die Apertur 3 wird durch einen Detektor 4 erfasst und an einen Emitter 120 übertragen. Der Emitter 120 führt die Rekonstruktion des Bildes durch, indem die Winkelverteilung auf die Apertur 103 ausgerichtet abgestrahlt wird, wodurch hinter der Apertur ein virtuelles Objekt 105, das dem ursprünglichen Objekt 5 entspricht, entsteht.

Grundsätzlich ist es auch möglich, eine Vorrichtung 1 mit einer Abbildungsoptik 8 zu verwenden, bei der mit Hilfe einer Transformation die Winkelverteilung eindeutig in eine räumliche Verteilung in der Abbildungsebene transformiert werden kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Aufzeichnungs- und Wiedergabesystem zum Aufzeichnen und Wiedergeben eines Bildes eines dreidimensionalen Objekts, mit
einer Aufzeichnungsvorrichtung (1) zur Aufzeichnung von mindestens einem Bild eines dreidimensionalen Objekts, wobei die Aufzeichnungsvorrichtung aufweist:
eine Apertur (3) und einen Detektor (4), wobei das dreidimensionale Objekt (5) vor der Apertur (3) und der Detektor (4) hinter der Apertur (3) angeordnet ist;
wobei die Öffnung der Apertur (3) derart ausgebildet ist, dass sich das durch die Apertur tretende Licht vornehmlich durch seinen Ausbreitungswinkel unterscheidet; und
dass der Detektor (4) ein winkelauflösender Detektor ist, der aus mehreren flächig konzentrisch um die Apertur angeordneten Empfangseinrichtungen (41) gebildet wird und konfiguriert ist, um die Intensität des von dem dreidimensionalen Objekt (5) ausgesandten Lichtes über den Winkel um die Apertur zu erfassen,
wobei die Aufzeichnungsvorrichtung (1) ferner eine optische Einrichtung (6) aufweist, die konfiguriert ist, um ausschließlich vom Objekt (5) ausgesandtes, senkrecht auf den Detektor (4) einfallendes Licht passieren zu lassen, und
einer Wiedergabevorrichtung (101) zur Wiedergabe von mindestens einem Bild eines dreidimensionalen Objekts, wobei die Wiedergabevorrichtung aufweist:
eine Projektionsfläche, eine Apertur (103) und einen Emitter (120), wobei die Projektionsfläche hinter der Apertur (103) und der Emitter (120) vor der Apertur (103) angeordnet ist;
wobei der Emitter (120) ein winkelauflösender Emitter ist, der aus mehreren optischen Emittereinrichtungen (121) besteht, die flächig konzentrisch um die Apertur (103) angeordnet sind und konfiguriert sind, um Licht entsprechend einer bekannten Intensitätsverteilung des von dem dreidimensionalen Objekt ausgesandten Lichts über einen Winkel zur Apertur (103) zu emittieren, wodurch auf der Projektionsfläche ein virtuelles Objekt (105) entsteht.

2. System gemäß einem der voranstehenden Ansprüche, wobei der Detektor (4) konfiguriert ist, um zusätzlich Farbinformationen zu erfassen.

3. System gemäß einem der vorstehenden Ansprüche, wobei der Detektor (4) aus optischen Fasern (7) und mindestens einer Empfangseinrichtung (41) besteht, wobei die optischen Fasern (7) konfiguriert sind, um mit ihren ersten Enden (7a) Bildinformationen aufzunehmen und die Bildinformationen an die mindestens eine Empfangseinrichtung (41) zu leiten.

4. System gemäß einem der vorstehenden Ansprüche, ferner mit ein Übertragungsmedium (700),
wobei das Übertragungsmedium (700) konfiguriert ist, um Bildinformationen von dem Detektor (4) der Aufzeichnungsvorrichtung (1) zu einem Emitter (120) der Wiedergabevorrichtung (101) zu übertragen, und
wobei der Emitter (120) konfiguriert ist, um die durch das Übertragungsmedium (700) an ihn übertragenen Bildinformationen entsprechend der erfassten Winkelverteilung räumlich zu rekonstruieren.

5. System gemäß Anspruch 4, wobei optische Fasern (7) den Detektor (4), das Übertragungsmedium (700) und den Emitter (120) bilden, indem sie konfiguriert sind, um mit ihrem ersten Ende (7a) die Bildinformationen aufnehmen und diese Bildinformationen an ihr zweites Ende (7b) übertragen und die Bildinformationen an ihrem zweiten Ende emittieren, und wobei die optischen Fasern (7) eine geringe numerische Apertur aufweisen, sodass nur nahezu senkrecht einfallendes Licht erfasst und auf die mindestens eine Empfangseinrichtung (41) geleitet wird.

6. System gemäß Anspruch 5, wobei die optischen Fasern (7) als geordnetes Faserbündel (77) ausgebildet sind, bei denen die Faserenden (7a; 7b) auseinander geführt und flächig angeordnet sind.

7. System gemäß Anspruch 6, wobei die Faserenden (7a; 7b) des Faserbündels (77) flächig konzentrisch um eine Apertur (3; 103) angeordnet sind.

8. Endgerät für Telekommunikation, **dadurch gekennzeichnet, dass** das Endgerät ein System gemäß einem der vorstehenden Ansprüche aufweist.

9. Verfahren zur Aufzeichnung, Übertragung und Rekonstruktion von mindestens einem Bild eines dreidimensionalen Objekts, mit einem Aufzeichnungs- und Wiedergabesystem gemäß einem der Ansprüche 1-8, wobei das Verfahren die folgenden Schritte aufweist:
(1) Aufzeichnen von Bildinformationen des von einem dreidimensionalen Objekt (5) ausgesandten Lichtes mit Hilfe des Detektors (4), wobei die Bildinformationen die Winkelverteilung des von dem Objekt (5) ausgesandten Lichtes um die Apertur (3) beinhalten;
(2) Übertragung der erfassten Bildinformationen an den Emitter (120);
(3) Rekonstruktion des Bildes durch den Emitter (120) unter Einbezug der erfassten und übertragenen Winkelverteilung.

10. Verfahren gemäß Anspruch 9, wobei die Winkelverteilung ferner in eine räumliche Verteilung in der Abbildungsebene transformiert wird.

## Claims

1. A recording and reproducing system for recording and reproducing an image of a three-dimensional object, comprising
a recording device (1) for recording at least one image of a three-dimensional object, wherein the recording device comprises:
an aperture (3) and a detector (4), wherein the three-dimensional object (5) is arranged in front of the aperture (3) and the detector (4) is arranged behind the aperture (3);
wherein the opening of the aperture (3) is configured such that the light passing through the aperture differs primarily in its angle of propagation; and
that the detector (4) is an angle-resolving detector which is formed by a plurality of receiving means (41) arranged flat and concentrically around the aperture and is configured to detect the intensity of the light emitted by the three-dimensional object (5) via the angle around the aperture,
wherein the recording device (1) further comprises an optical means (6) configured to allow only light emitted by the object (5) and incident perpendicularly on the detector (4) to pass, and
a reproducing device (101) for reproducing at least one image of a three-dimensional object, wherein the reproducing device comprises:
a projection surface, an aperture (103) and an emitter (120), wherein the projection surface is arranged behind the aperture (103) and the emitter (120) is arranged in front of the aperture (103);
wherein the emitter (120) is an angle-resolving emitter comprising a plurality of optical emitter devices (121) arranged flat and concentrically around the aperture (103) and configured to emit light according to a known intensity distribution of the light emitted from the three-dimensional object over an angle to the aperture (103), whereby a virtual object (105) is formed on the projection surface.

2. The system according to any one of the preceding claims, wherein the detector (4) is configured to additionally detect color information.

3. The system according to any one of the preceding claims, wherein the detector (4) comprises optical fibers (7) and at least one receiving means (41), wherein the optical fibers (7) are configured to receive image information with their first ends (7a) and transmit the image information to the at least one receiving means (41).

4. The system according to any one of the preceding claims, further comprising a transmission medium (700),
wherein the transmission medium (700) is configured to transmit image information from the detector (4) of the recording device (1) to an emitter (120) of the reproducing device (101), and
wherein the emitter (120) is configured to spatially reconstruct the image information transmitted to it by the transmission medium (700) according to the detected angular distribution.

5. The system according to claim 4, wherein optical fibers (7) form the detector (4), the transmission medium (700) and the emitter (120) by being configured to receive the image information with their first end (7a) and transmit this image information to their second end (7b) and emit the image information at their second end, and wherein the optical fibers (7) have a small numerical aperture so that only light incident almost vertically is detected and directed to the at least one receiving means (41).

6. The system according to claim 5, wherein the optical fibers (7) are formed as an ordered fiber bundle (77) in which the fiber ends (7a; 7b) are guided apart and arranged flat.

7. The system according to claim 6, wherein the fiber ends (7a; 7b) of the fiber bundle (77) are arranged flat and concentrically around an aperture (3; 103).

8. A terminal for telecommunications, **characterized in that** the terminal comprises a system according to any one of the preceding claims.

9. A method for recording, transmitting and reconstructing at least one image of a three-dimensional object with a recording and reproducing system according to any one of claims 1-8, wherein the method comprises the following steps:
(1) recording image information of the light emitted from a three-dimensional object (5) by means of the detector (4), wherein the image information includes the angular distribution of the light emitted from the object (5) around the aperture (3);
(2) transmitting the detected image information to the emitter (120);
(3) reconstructing the image by the emitter (120), thereby taking into account the detected and transmitted angular distribution.

10. The method according to claim 9, wherein the angular distribution is further transformed into a spatial distribution in the imaging plane.

## Revendications

1. Système d'enregistrement et de reproduction destiné à enregistrer et à reproduire une image d'un objet tridimensionnel, comprenant
un dispositif d'enregistrement (1) destiné à enregistrer au moins une image d'un objet tridimensionnel, dans lequel le dispositif d'enregistrement présente :
une ouverture (3) et un détecteur (4), l'objet tridimensionnel (5) étant agencé devant l'ouverture (3), et le détecteur (4), derrière l'ouverture (3) ;
dans lequel l'orifice de l'ouverture (3) est réalisé de telle sorte que la lumière passant à travers l'ouverture se distingue de préférence par son angle de propagation ; et
de telle sorte que le détecteur (4) est un détecteur de résolution angulaire qui est formé de plusieurs moyens de réception (41) agencés à plat de manière concentrique autour de l'ouverture et qui est configuré pour détecter l'intensité de la lumière émise depuis l'objet tridimensionnel (5) en fonction de l'angle autour de l'ouverture,
dans lequel le dispositif d'enregistrement (1) présente en outre un moyen optique (6) qui est configuré pour laisser passer uniquement une lumière incidente perpendiculairement sur le détecteur (4) émise depuis l'objet (5), et
un dispositif de reproduction (101) destiné à reproduire au moins une image d'un objet tridimensionnel, le dispositif de reproduction présentant :
une surface de projection, une ouverture (103) et un émetteur (120), la surface de projection étant agencée derrière l'ouverture (103), et l'émetteur (120) devant l'ouverture (103) ;
dans lequel l'émetteur (120) est un émetteur à résolution angulaire qui se compose de plusieurs moyens émetteurs optiques (121) agencés à plat de manière concentrique autour de l'ouverture (103) et qui est configuré pour émettre de la lumière en correspondance avec une distribution d'intensité connue de la lumière émise depuis l'objet tridimensionnel en fonction d'un angle par rapport à l'ouverture (103), moyennant quoi un objet virtuel (105) apparaît sur la surface de projection.

2. Système selon l'une quelconque des revendications précédentes, dans lequel le détecteur (4) est configuré pour détecter en supplément des informations de couleur.

3. Système selon l'une quelconque des revendications précédentes, dans lequel le détecteur (4) se compose de fibres optiques (7) et d'au moins un moyen de réception (41), les fibres optiques (7) étant configurées pour enregistrer des informations d'image avec leurs premières extrémités (7a) et pour conduire les informations d'image vers ledit au moins un moyen de réception (41).

4. Système selon l'une quelconque des revendications précédentes, comprenant en outre un support de transmission (700),
dans lequel le support de transmission (700) est configuré pour transmettre des informations d'image depuis le détecteur (4) du dispositif d'enregistrement (1) jusqu'à un émetteur (120) du dispositif de reproduction (101), et
dans lequel l'émetteur (120) est configuré pour reconstruire dans l'espace les informations d'image qui lui sont transmises via le support de transmission (700) en correspondance avec la distribution angulaire détectée.

5. Système selon la revendication 4, dans lequel des fibres optiques (7) forment le détecteur (4), le support de transmission (700) et l'émetteur (120), en étant configurées pour recevoir les informations d'image avec leur première extrémité (7a) et en transmettant ces informations d'image au niveau de leur seconde extrémité (7b) et en émettant les informations d'image au niveau de leur seconde extrémité, et dans lequel les fibres optiques (7) présentent une faible ouverture numérique de sorte que seule une lumière incidente pratiquement perpendiculaire est détectée et guidée jusqu'audit au moins un moyen de réception (41).

6. Système selon la revendication 5, dans lequel les fibres optiques (7) sont réalisées sous la forme d'un faisceau de fibres ordonné (77), dans lequel les extrémités de fibres (7a ; 7b) sont écartées les unes des autres et sont agencées à plat.

7. Système selon la revendication 6, dans lequel les extrémités de fibres (7a ; 7b) du faisceau de fibres (77) sont agencées à plat de manière concentrique autour d'une ouverture (3 ; 103).

8. Appareil terminal de télécommunication, **caractérisé en ce que** l'appareil terminal présente un système selon l'une quelconque des revendications précédentes.

9. Procédé d'enregistrement, de transmission et de reconstruction d'au moins une image d'un objet tridimensionnel, comprenant un système d'enregistrement et de reproduction selon l'une quelconque des revendications 1 à 8, le procédé comprenant les étapes suivantes consistant à :
(1) enregistrer des informations d'image de la lumière émise depuis un objet tridimensionnel (5) à l'aide du détecteur (4), les informations d'image comprenant la distribution angulaire de la lumière émise depuis l'objet (5) autour de l'ouverture (3) ;
(2) transmettre à l'émetteur (120) les informations d'image détectées ;
(3) reconstruire l'image au moyen de l'émetteur (120) en tenant compte de la distribution angulaire détectée et transmise.

10. Procédé selon la revendication 9, dans lequel la distribution angulaire est en outre transformée en une distribution spatiale dans le plan de représentation.
